# EUROPEAN PATENT APPLICATION

(11) **EP 4 513 871 A1**
(43) Date of publication of application: **26.02.2025**
(21) Application number: 24195599.6
(22) Date of filing: 21.08.2024
(51) Int. Cl.: H04N 19/423, G06T 1/60, H04N 19/436, H04N 19/625, H04N 19/86, H04N 19/91

(54) **SYSTEMS AND METHODS FOR IN-STORAGE VIDEO PROCESSING**

(30) Priority: 25.08.2023 US 202363534737 P; 08.11.2023 US 202318505090
(71) Applicant: Samsung Electronics Co., Ltd., Gyeonggi-do, 16677 (KR)
(72) Inventor: SUN, Gongjin, San Jose, CA, 95134 (US); KACHARE, Ramdas, San Jose, CA, 95134 (US); SOLTANIYEH, Mohammadreza, San Jose, CA, 95134 (US); KAHN, Caroline, San Jose, CA, 95134 (US); YAO, Xuebin, San Jose, CA, 95134 (US)
(74) Representative: Kuhnen & Wacker Patent- und Rechtsanwaltsbüro PartG mbB

(57) **Abstract**

A system and method for in-storage video processing. In some embodiments, the system includes a computational storage device, the computational storage device including non-volatile storage and a processing circuit. The processing circuit may be configured to process a first data unit and to process a second data unit, in parallel with the first data unit.

## Description

### FIELD

One or more aspects of embodiments according to the present disclosure relate to persistent storage, and more particularly to a system and method for in-storage video processing.

### BACKGROUND

In some computing or data storage systems, video files may be stored in compressed form in persistent storage devices.

It is with respect to this general technical environment that aspects of the present disclosure are related.

### SUMMARY

According to an embodiment of the present disclosure, there is provided a system, including: a computational storage device, the computational storage device including: non-volatile storage; and a processing circuit, the processing circuit being configured: to process a first data unit; and to process a second data unit, in parallel with the first data unit.

In some embodiments: the first data unit includes a first portion of an image; and the second data unit includes a second portion of the image.

In some embodiments: the first data unit includes a first portion of an image; the second data unit includes a second portion of the image; the first portion of the image is a first component of a first piece of the image; and the second portion of the image is a second component of the first piece of the image.

In some embodiments: the first data unit includes a first portion of an image; the second data unit includes a second portion of the image; the first portion of the image is a first component of a first piece of the image; the second portion of the image is a second component of the first piece of the image; the first component is a luma component; and the second component is a chroma component.

In some embodiments: the first data unit includes a first portion of an image; the second data unit includes a second portion of the image; the first portion of the image is a first component of a first piece of the image; the second portion of the image is a second component of the first piece of the image; the first component is a luma component; the second component is a chroma component; the processing circuit is configured to process the first data unit using an inverse discrete cosine transform; and the processing circuit is configured to process the second data unit using an inverse discrete cosine transform.

In some embodiments: the first data unit includes a first portion of an image; the second data unit includes a second portion of the image; the first portion of the image is a first component of a first piece of the image; the second portion of the image is a second component of the first piece of the image; the first component is a luma component; the second component is a chroma component; the processing circuit is configured to process the first data unit using a deblocking filter; and the processing circuit is configured to process the second data unit using a deblocking filter.

In some embodiments: the first data unit includes a first portion of an image; the second data unit includes a second portion of the image; the first portion of the image is a first piece of the image; and the second portion of the image is a second piece of the image.

In some embodiments: the first data unit includes a first portion of an image; the second data unit includes a second portion of the image; the first portion of the image is a first piece of the image; the second portion of the image is a second piece of the image; the processing circuit is configured to process the first data unit using entropy decoding; and the processing circuit is configured to process the second data unit using entropy decoding.

In some embodiments: the first data unit includes a first portion of an image; the second data unit includes a second portion of the image; the first portion of the image is a first piece of the image; the second portion of the image is a second piece of the image; the processing circuit is configured to process the first data unit using a deblocking filter; and the processing circuit is configured to process the second data unit using a deblocking filter.

In some embodiments: the first data unit includes a first portion of an image; the second data unit includes a second portion of the image; the first portion of the image is a first piece of the image; the second portion of the image is a second piece of the image; the processing circuit is configured to process the first data unit using entropy decoding; the processing circuit is configured to process the second data unit using entropy decoding; the processing circuit is further configured to process the first data unit using an inverse discrete cosine transform; and the processing circuit is further configured to process the second data unit using an inverse discrete cosine transform.

In some embodiments: the first data unit includes a first portion of an image; the second data unit includes a second portion of the image; the first portion of the image is a first piece of the image; the second portion of the image is a second piece of the image; the processing circuit is configured to process the first data unit using entropy decoding; the processing circuit is configured to process the second data unit using entropy decoding; the processing circuit is further configured to process the first data unit using an inverse discrete cosine transform; the processing circuit is further configured to process the second data unit using an inverse discrete cosine transform; the processing circuit is further configured to process the first data unit using a deblocking filter; and the processing circuit is further configured to process the second data unit using a deblocking filter.

In some embodiments, the system further includes a storage memory, wherein: the first data unit includes a first portion of an image; the second data unit includes a second portion of the image; the first portion of the image is a first piece of the image; the second portion of the image is a second piece of the image; the processing circuit is configured to process the first data unit using entropy decoding; the processing circuit is configured to process the second data unit using entropy decoding; the processing circuit is further configured to process the first data unit using an inverse discrete cosine transform to form a first pixel value; the processing circuit is further configured to process the second data unit using an inverse discrete cosine transform to form a second pixel value; the processing circuit is further configured to store the first pixel value in the storage memory; the processing circuit is further configured to store the second pixel value in the storage memory; the processing circuit is further configured to read the first pixel value from the storage memory; the processing circuit is further configured to read the second pixel value from the storage memory; the processing circuit is further configured to process the first pixel value using a deblocking filter; and the processing circuit is further configured to process the second pixel value using a deblocking filter.

According to an embodiment of the present disclosure, there is provided a method, including: reading, by a processing circuit of a computational storage device, a first data unit from a non-volatile memory of the computational storage device; reading, by the processing circuit, a second data unit from the non-volatile memory; processing the first data unit; and processing the second data unit, in parallel with the first data unit.

In some embodiments: the first data unit includes a first portion of an image; the second data unit includes a second portion of the image; the first portion of the image is a first piece of the image; the second portion of the image is a second piece of the image; the processing of the first data unit includes using entropy decoding; and the processing of the second data unit includes using entropy decoding.

In some embodiments: the first data unit includes a first portion of an image; the second data unit includes a second portion of the image; the first portion of the image is a first piece of the image; the second portion of the image is a second piece of the image; the processing of the first data unit includes using entropy decoding; the processing of the second data unit includes using entropy decoding; the processing of the first data unit further includes using an inverse discrete cosine transform; and the processing of the second data unit further includes using an inverse discrete cosine transform.

In some embodiments: the first data unit includes a first portion of an image; the second data unit includes a second portion of the image; the first portion of the image is a first piece of the image; the second portion of the image is a second piece of the image; the processing of the first data unit includes using entropy decoding; the processing of the second data unit includes using entropy decoding; the processing of the first data unit further includes using an inverse discrete cosine transform; the processing of the second data unit further includes using an inverse discrete cosine transform; the processing of the first data unit further includes using a deblocking filter; and the processing of the second data unit further includes using a deblocking filter.

In some embodiments: the first data unit includes a first portion of an image; the second data unit includes a second portion of the image; the first portion of the image is a first piece of the image; the second portion of the image is a second piece of the image; the processing of the first data unit includes using entropy decoding; the processing of the second data unit includes using entropy decoding; the processing of the first data unit further includes using an inverse discrete cosine transform to form a first pixel value; the processing of the second data unit further includes using an inverse discrete cosine transform to form a second pixel value; the processing of the first data unit further includes storing the first pixel value in a storage memory of the computational storage device; the processing of the second data unit further includes storing the second pixel value in the storage memory; the processing of the first data unit further includes reading the first pixel value from the storage memory; the processing of the second data unit further includes reading the second pixel value from the storage memory; the processing of the first pixel value includes using a deblocking filter; and the processing of the second pixel value includes using a deblocking filter.

According to an embodiment of the present disclosure, there is provided a computational storage device including: non-volatile storage; a storage memory; and a processing circuit, the processing circuit being configured: to process a first data unit; and to process a second data unit, in parallel with the first data unit.

In some embodiments: the first data unit includes a first portion of an image; the second data unit includes a second portion of the image; the first portion of the image is a first component of a first piece of the image; the second portion of the image is a second component of the first piece of the image; the first component is a luma component; the second component is a chroma component; the processing circuit is configured to process the first data unit using an inverse discrete cosine transform; and the processing circuit is configured to process the second data unit using an inverse discrete cosine transform.

In some embodiments: the first data unit includes a first portion of an image; the second data unit includes a second portion of the image; the first portion of the image is a first component of a first piece of the image; the second portion of the image is a second component of the first piece of the image; the first component is a luma component; the second component is a chroma component; the processing circuit is configured to process the first data unit using a deblocking filter; and the processing circuit is configured to process the second data unit using a deblocking filter.

### BRIEF DESCRIPTION OF THE DRAWINGS

These and other features and advantages of the present disclosure will be appreciated and understood with reference to the specification, claims, and appended drawings wherein:
FIG. 1A is a block diagram of a host and a storage device, according to an embodiment of the present disclosure;
FIG. 1B is a block diagram of a storage device, according to an embodiment of the present disclosure;
FIG. 1C is a system level block diagram, according to an embodiment of the present disclosure;
FIG. 1D is a system level diagram of a host and a persistent storage device having video processing capabilities, according to an embodiment of the present disclosure;
FIG. 2A is a layout diagram of a frame of video, according to an embodiment of the present disclosure;
FIG. 2B is a layout diagram of a stream of compressed video, according to an embodiment of the present disclosure;
FIG. 2C is a hierarchical process diagram of video decoding, according to an embodiment of the present disclosure;
FIG. 2D is a hybrid block and flow diagram of a system and method for decoding and parallel component reconstruction, according to an embodiment of the present disclosure;
FIG. 2E is a hybrid block and flow diagram of a system and method for parallel deblocking, according to an embodiment of the present disclosure;
FIG. 2F is a hybrid block and flow diagram of a system and method for parallel processing of slices in a frame of video, according to an embodiment of the present disclosure; and
FIG. 3 is a flow chart, according to an embodiment of the present disclosure.

### DETAILED DESCRIPTION

The detailed description set forth below in connection with the appended drawings is intended as a description of exemplary embodiments of a system and method for in-storage video processing provided in accordance with the present disclosure and is not intended to represent the only forms in which the present disclosure may be constructed or utilized. The description sets forth the features of the present disclosure in connection with the illustrated embodiments. It is to be understood, however, that the same or equivalent functions and structures may be accomplished by different embodiments that are also intended to be encompassed within the scope of the disclosure. As denoted elsewhere herein, like element numbers are intended to indicate like elements or features.

Decoding of compressed video may be a computationally costly process, with a number of processing steps performed for each frame of video. A frame of video may be composed of one or more slices (or "pieces"), each of which may be composed of a plurality of macroblocks, which in turn may be composed of pixels. Each pixel may be represented, in a decoded image, by three components, e.g., a luma component and two chroma component.

Compressed video may be stored in a persistent storage device, and decoded as needed for display purposes. The persistent storage device may be connected to (or part of) a host, and the decoding may be performed on the host, after the host has read the compressed video from the persistent storage device. Such an approach may, however, burden the processing and memory resources of the host, and it may be relatively inefficient, to the extent that the host employs a general purpose processing circuit (e.g., a central processing unit (CPU)) to perform the decoding. As used herein, "persistent" storage can include non-volatile storage, including but not limited to flash memory, erasable programmable read-only memory (EPROM), electrically erasable programmable read-only memory (EEPROM), ferroelectric random-access memory, hard disk drives, optical discs, magnetic tape, combinations thereof, and/or the like. A "persistent storage device" or "non-volatile storage device" can include a device containing non-volatile storage.

As such, in some embodiments, a persistent storage device which stores compressed video may be constructed to include hardware for performing video decoding, such as a configurable processing circuit which may include an on-chip buffer. Such a persistent storage device may be referred to as a computational storage device.

The configurable processing circuit of the persistent storage device may be configured to perform various video decoding operations in parallel, to improve throughput. For example, each frame of video may include a plurality of pixels, each pixel having several components (e.g., (i) a red component, a green component and a blue component or (ii) a luminance component and two chrominance components). The decoding of the components may be performed in parallel (e.g., concurrently). The decoding of slices may also be performed concurrently. Certain aspects of the processing of each macroblock (e.g., image reconstruction processing) may be independent of the processing of other macroblocks, and, as such, this processing may be performed in parallel for sets of macroblocks. Other aspects of the processing of a macroblock (e.g., deblocking) may rely on the contents of other (e.g., neighboring) macroblocks, and, as such, such processing steps may be performed in a sequence in which the information from other macroblocks is available when it is needed.

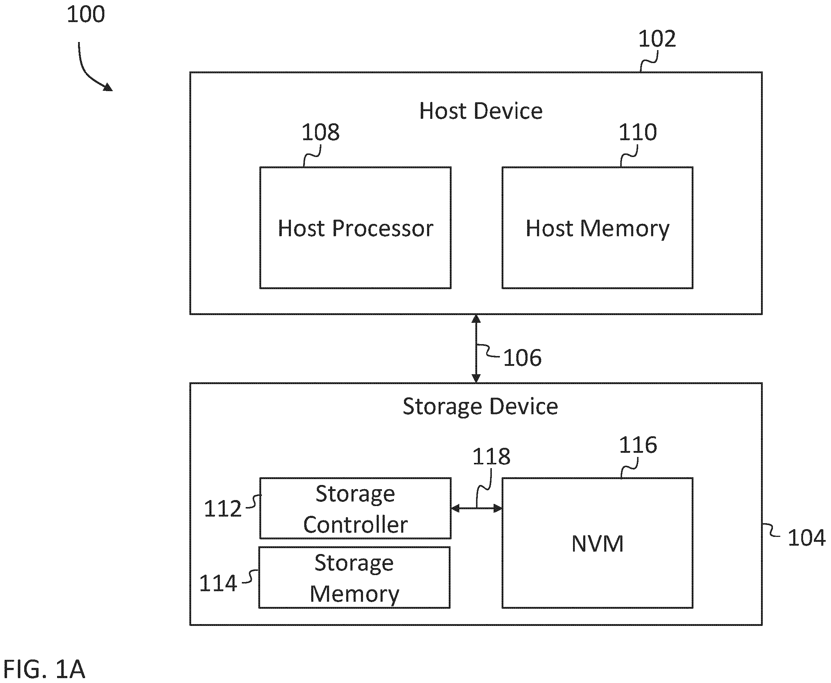

FIG. 1A illustrates a system, which may be referred to as a server 100, in accordance with some example embodiments of the disclosure. Referring to FIG. 1A, the server 100 may include a host device (or simply "host") 102 and a storage device 104 (which may be a persistent storage device 104). In some embodiments, the host device 102 may be housed with the persistent storage device 104, and in other embodiments, the host device 102 may be separate from the persistent storage device 104. The host device 102 may include any suitable computing device connected to a persistent storage device 104 such as, for example, a personal computer (PC), a portable electronic device, a hand-held device, a laptop computer, or the like. The system of FIG. 1A may be employed to perform video processing. For example, as discussed in further detail below parallel decoding operations (for example, processing a first data unit (for example, a first component of a slice of a video frame, or a first slice) concurrently with a second data unit (for example, a second component of the slice, or a second slice)). In some embodiments, such parallel video decoding operations are performed in the persistent storage device 104 (which, in such an embodiment, may be referred to as a computational storage device).

The host device 102 may be connected to the persistent storage device 104 over a host interface 106. The host device 102 may issue data request commands or input-output (IO) commands (for example, read or write commands) to the persistent storage device 104 over the host interface 106, and may receive responses from the persistent storage device 104 over the host interface 106.

The host device 102 may include a host processor 108 and host memory 110. The host processor 108 may be a processing circuit (discussed in further detail below), for example, such as a general-purpose processor or a central processing unit (CPU) core of the host device 102.

The host processor 108 may be connected to other components via an address bus, a control bus, a data bus, or the like. The host memory 110 may be considered as high performing main memory (for example, primary memory) of the host device 102. For example, in some embodiments, the host memory 110 may include (or may be) volatile memory, for example, such as dynamic random-access memory (DRAM). However, the present disclosure is not limited thereto, and the host memory 110 may include (or may be) any suitable high performing main memory (for example, primary memory) replacement for the host device 102 as would be known to those skilled in the art. For example, in other embodiments, the host memory 110 may be relatively high performing non-volatile memory, such as NAND flash memory, Phase Change Memory (PCM), Resistive RAM, Spin-transfer Torque RAM (STTRAM), any suitable memory based on PCM technology, memristor technology, or resistive random access memory (ReRAM), and may include, for example, chalcogenides, or the like.

The persistent storage device 104 may operate as secondary memory that may persistently store data accessible by the host device 102. In this context, the persistent storage device 104 may include relatively slower memory when compared to the high performing memory of the host memory 110.

For example, in some embodiments, the persistent storage device 104 may be secondary memory of the host device 102, for example, such as a Solid-State Drive (SSD). However, the present disclosure is not limited thereto, and in other embodiments, the storage device 104 may include (or may be) any suitable storage device such as, for example, a magnetic storage device (for example, a hard disk drive (HDD), or the like), an optical storage device (for example, a Blue-ray disc drive, a compact disc (CD) drive, a digital versatile disc (DVD) drive, or the like), other kinds of flash memory devices (for example, a USB flash drive, and the like), or the like.

In various embodiments, the persistent storage device 104 may conform to a large form factor standard (for example, a 3.5 inch hard drive form-factor), a small form factor standard (for example, a 2.5 inch hard drive form-factor), an M.2 form factor, an E1.S form factor, or the like. In other embodiments, the persistent storage device 104 may conform to any suitable or desired derivative of these form factors. For convenience, the persistent storage device 104 may be described hereinafter in the context of a solid-state drive, but the present disclosure is not limited thereto.

The persistent storage device 104 may be communicably connected to the host device 102 over the host interface 106. The host interface 106 may facilitate communications (for example, using a connector and a protocol) between the host device 102 and the persistent storage device 104. In some embodiments, the host interface 106 may, for example, facilitate the exchange of storage requests (or "commands") and responses (for example, command responses) between the host device 102 and the persistent storage device 104. In some embodiments, the host interface 106 may facilitate data transfers by the persistent storage device 104 to and from the host memory 110 of the host device 102.

For example, in various embodiments, the host interface 106 (for example, the connector and the protocol thereof) may include (or may conform to) Small Computer System Interface (SCSI), Non Volatile Memory Express (NVMe), Peripheral Component Interconnect Express (PCIe), remote direct memory access (RDMA) over Ethernet, Serial Advanced Technology Attachment (SATA), Fiber Channel, Serial Attached SCSI (SAS), NVMe over Fabric (NVMe-oF), or the like. In other embodiments, the host interface 106 (for example, the connector and the protocol thereof) may include (or may conform to) various general-purpose interfaces, for example, such as Ethernet, Universal Serial Bus (USB), and/or the like.

In some embodiments, the persistent storage device 104 may include a persistent memory controller (or "storage controller") 112, storage memory 114 (which may also be referred to as a buffer), non-volatile memory (NVM) 116, and a storage interface 118. The storage memory 114 may be high-performing memory of the persistent storage device 104, and may include (or may be) volatile memory, for example, such as DRAM, but the present disclosure is not limited thereto, and the storage memory 114 may, for example, be any suitable kind of high-performing volatile or non-volatile memory.

The non-volatile memory 116 may persistently store data received, for example, from the host device 102. The non-volatile memory 116 may include, for example, NAND flash memory, but the present disclosure is not limited thereto, and the non-volatile memory 116 may include any suitable kind of memory for persistently storing the data according to an implementation of the persistent storage device 104 (for example, magnetic disks, tape, optical disks, or the like).

The persistent memory controller 112 may be connected to the non-volatile memory 116 over the storage interface 118. In the context of the SSD, the storage interface 118 may be referred to as flash channel, and may be an interface with which the non-volatile memory 116 (for example, NAND flash memory) may communicate with a processing component (for example, the persistent memory controller 112) or other device. Commands such as reset, write enable, control signals, clock signals, or the like may be transmitted over the storage interface 118.

In some embodiments, a software interface may be used in combination with a hardware element that may be used to test or verify the workings of the storage interface 118. The software may be used to read data from and write data to the non-volatile memory 116 via the storage interface 118. In some embodiments, the software may include firmware that may be downloaded onto hardware elements (for example, for controlling write, erase, and read operations).

The persistent memory controller 112 (which may be a processing circuit (discussed in further detail below)) may be connected to the host interface 106, and may, for example, manage signaling over the host interface 106. In some embodiments, the persistent memory controller 112 may include an associated software layer (for example, a host interface layer) to manage the physical connector of the host interface 106. The persistent memory controller 112 may respond to input or output requests received, for example, from the host device 102 over the host interface 106. The persistent memory controller 112 may also manage the storage interface 118, for example to control, and to provide access to and from, the non-volatile memory 116.

For example, the persistent memory controller 112 may include at least one processing component embedded therein for interfacing with the host device 102 and the non-volatile memory 116. The processing component may include, for example, a general purpose digital circuit (for example, a microcontroller, a microprocessor, a digital signal processor, or a logic device (for example, a field programmable gate array (FPGA), an application-specific integrated circuit (ASIC), or the like)) capable of executing data access instructions (for example, via firmware or software) to provide access to the data stored in the non-volatile memory 116 according to the data access instructions. For example, the data access instructions may correspond to the data request commands, and may include any suitable data storage and retrieval algorithm (for example, read, write, or erase) instructions, or the like.

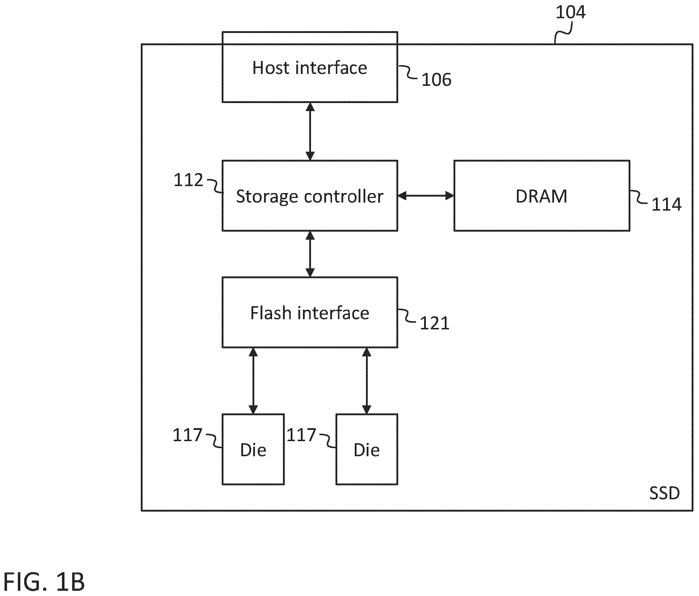

FIG. 1B is a block diagram of a persistent storage device 104 (for example, a solid-state drive), in accordance with some example embodiments of the disclosure. The host interface 106 is used by the host 102, to communicate with the persistent storage device 104.

The data write and read input output commands, as well as various media management commands such as the nonvolatile memory express (NVMe) Identify command and the NVMe Get Log command may be received, by the persistent storage device 104, through the host interface 106. The host interface 106 may also be used by the persistent storage device 104 to perform data transfers to and from host system memory. The persistent storage device 104 may store data in non-volatile memory 116 (for example, not-AND (NAND) flash memory), for example, in memory dies 117 containing memory cells, each of which may be (as discussed above), for example, a Single-Level Cell (SLC), a Multi-Level Cell (MLC), or a Triple-Level Cell (TLC). A Flash Translation Layer (FTL), which may be implemented in the persistent memory controller 112 (for example, based on firmware (for example, based on firmware stored in the non-volatile memory 116)) may provide a mapping between logical addresses used by the host and physical addresses of the data in the non-volatile memory 116.

The persistent storage device 104 may also include (i) a buffer (for example, the storage memory 114) (which may include, for example, consist of, dynamic random-access memory (DRAM)), and (ii) a flash interface (or "flash controller") 121 for providing suitable signals to the memory dies 117 of the non-volatile memory 116. Some or all of the host interface 106, the Flash Translation Layer (as mentioned above), the storage memory 114 (for example, the buffer), and the flash interface 121 may be implemented in a processing circuit, which may be referred to as the persistent storage device controller 112 (or simply as the persistent memory controller 112).

The NAND flash memory may be read or written at the granularity of a flash page, which may be between 8 kB and 16 kB in size. Before the flash memory page is reprogrammed with new data, the flash memory page may first be erased. The granularity of an erase operation may be one NAND block, or "physical block", which may include, for example, between 128 and 256 pages.

Because the granularity of erase and program operations are different, garbage collection (GC) may be used to free up partially invalid physical blocks and to make room for new data. The garbage collection operation may (i) identify fragmented flash blocks, in which a large proportion (for example, most) of the pages are invalid, and (ii) erase each such physical block. When garbage collection is completed, the pages in an erased physical block may be recycled and added to a free list in the Flash Translation Layer.

The non-volatile memory 116 (for example, if the non-volatile memory 116 includes or is flash memory) may be capable of being programmed and erased only a limited number of times. This may be referred to as the maximum number of program/erase cycles (P/E cycles) the non-volatile memory 116 can sustain. To maximize the life of the persistent storage device 104, the persistent storage device controller 112 may endeavor to distribute write operations across all of the physical blocks of the non-volatile memory 116; this process may be referred to as wear-leveling.

A mechanism that may be referred to as "read disturb" may reduce persistent storage device reliability. A read operation on a NAND flash memory cell may, for example, cause the threshold voltage of nearby unread flash cells in the same physical block to change. Such disturbances may change the logical states of the unread cells, and may lead to uncorrectable error-correcting code (ECC) read errors, degrading flash endurance.

To avoid this result, the Flash Translation Layer may have a counter of the total number of reads to a physical block since the last erase operation. The contents of the physical block may be copied to a new physical block, and the physical block may be recycled, when the counter exceeds a threshold (for example, 50,000 reads for Multi-Level Cell), to avoid irrecoverable read disturb errors. As an alternative, in some embodiments, a test read may periodically be performed within the physical block to check the error-correcting code error rate; if the error rate is close to the error-correcting code capability, the data may be copied to a new physical block.

Because of the relocation of data performed by various operations (for example, garbage collection) in the persistent storage device 104, the amount of data that is erased and rewritten may be larger than the data written to the persistent storage device 104 by the host. Each time data are relocated without being changed by the host system, a quantity referred to as write amplification is increased, and the life of the non-volatile memory 116 may be reduced. Write amplification may be measured as the ratio of (i) the number of writes committed to the flash memory to (ii) the number of writes coming from the host system.

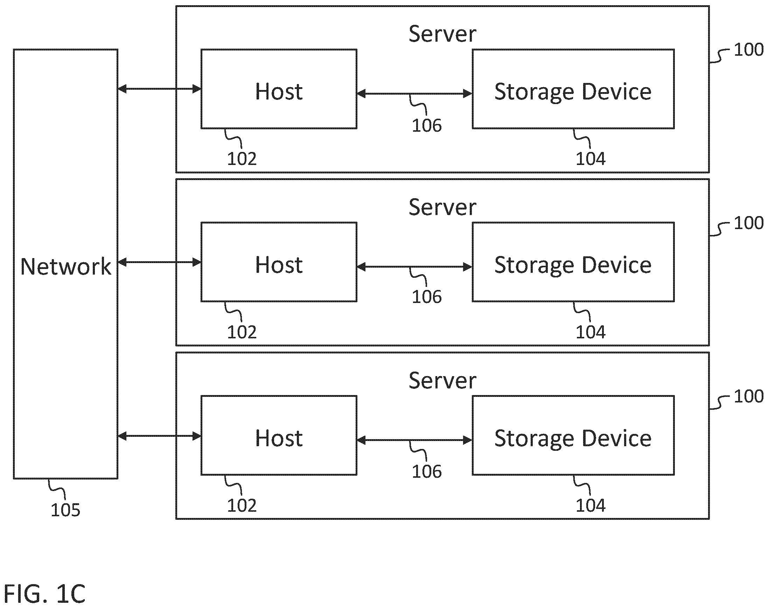

FIG. 1C is a system-level diagram of a system capable of video processing (for example, video decoding) operations, in accordance with some example embodiments of the disclosure. Within each server 100, a host 102 is connected to a persistent storage device 104 (which may be, for example, a solid state drive (SSD)). The persistent storage device 104 may have (as in the embodiments of FIGs. 1A and 1B) a form factor that is any one of a plurality of form factors suitable for persistent storage devices, including but not limited to a 2.5" form factor, a 1.8" form factor, a MO-297 form factor, a MO-300 form factor, a M.2 form factor, and Enterprise and Data Center SSD Form Factor (EDSFF). One or more of the servers 100 may perform video processing (for example, one or more of the persistent storage devices 104 (which may be computational storage devices) of the servers 100 may perform video processing using parallel operations as discussed in further detail below).

The persistent storage device 104 may have an electrical interface (which may be referred to as a "host interface") 106, through which the persistent storage device 104 may be connected to the host 102, that (as in the embodiments of FIGs. 1A and 1B) may be any one of a plurality of interfaces suitable for persistent storage devices, including Peripheral Component Interconnect (PCI), PCI express (PCIe), Ethernet, Small Computer System Interface (SCSI), Serial AT Attachment (SATA), and Serial Attached SCSI (SAS) or Universal Flash Storage (UFS). A Universal Flash Storage may include a plurality of serial interfaces each of which may include a full duplex high-speed serial lane. The persistent storage device 104 may include an interface circuit which operates as an interface adapter between the host interface 106 and one or more internal interfaces in the persistent storage device 104.

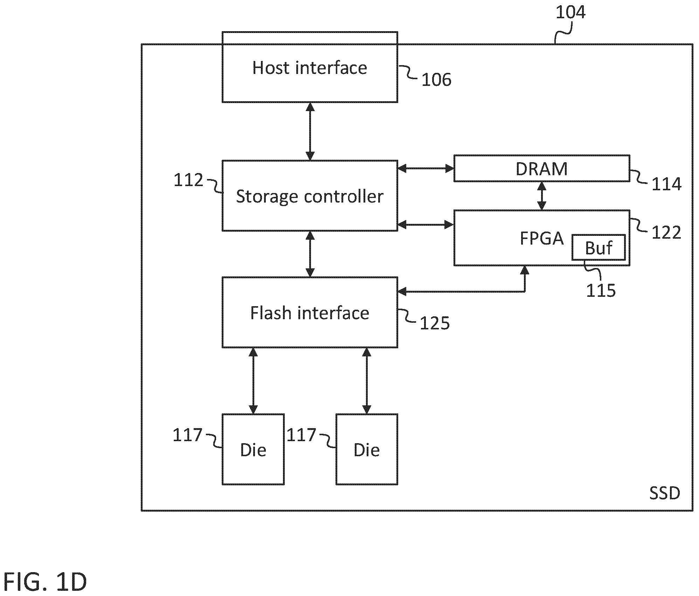

As used herein, "persistent memory" means non-volatile memory, for example, persistent memory is non-volatile memory, which may continue to store data when electrical power is not supplied to the persistent memory. The persistent storage device 104 may include an interface circuit 130 (FIG. 1D) which operates as an interface adapter between the host interface and one or more internal interfaces in the persistent storage device 104.

The host interface may be used by the host 102, to communicate with the persistent storage device 104, for example, by sending write and read commands, which may be received, by the persistent storage device 104, through the host interface 106. In some embodiments, the host 102 may send elements of an input feature map to the persistent storage device 104 through the host interface 106 and the persistent storage device 104 may calculate products of the elements of the input feature map and the weights. The host interface may also be used by the persistent storage device 104 to perform data transfers to and from system memory of the host 102. Such data transfers may be performed using direct memory access (DMA). For example, when the host 102 sends a write command to the persistent storage device 104, the persistent storage device 104 may fetch the data to be written to the non-volatile memory 116 from the host memory 110 of the host device 102 using direct memory access, and the persistent storage device 104 may then save the fetched data to the non-volatile memory 116.

Similarly, if the host 102 sends a read command to the persistent storage device 104, the persistent storage device 104 may read the requested data (i.e., the data specified in the read command) from the non-volatile memory 116 and save the requested data in the host memory 110 of the host device 102 using direct memory access. The persistent storage device 104 may store data in a persistent memory, for example, not-AND (NAND) flash memory, for example, in memory dies containing memory cells, each of which may be, for example, a Single-Level Cell (SLC), a Multi-Level Cell (MLC), or a Triple-Level Cell (TLC).

The persistent storage device 104 may (as in the embodiments of FIGs. 1A and 1B) store data in a persistent memory, for example, not-AND (NAND) flash memory, for example, in memory dies containing memory cells, each of which may be, for example, a Single-Level Cell (SLC), a Multi-Level Cell (MLC), or a Triple-Level Cell (TLC), and/or the like.

A Flash Translation Layer (FTL) of the persistent storage device 104 may provide a mapping between logical addresses used by the host 102 and physical addresses of the data in the persistent memory. The persistent storage device 104 may also include (i) a buffer (which may include, for example, consist of, dynamic random-access memory (DRAM)), and (ii) a persistent memory controller (for example, a flash controller) for providing suitable signals to the persistent memory. Some or all of the host interface, the Flash Translation Layer, the buffer, and the persistent memory controller may be implemented in a processing circuit, which may be referred to as the persistent storage device controller.

To process (as part of a video decoding operation) a first data unit (for example, a first component of a slice, or a first slice) concurrently with a second data unit (for example, a second component of the slice, or a second slice). In some embodiments, the video decoding may be performed in the persistent storage device 104. The persistent storage device 104 may include a processing circuit for this purpose (for example, a configurable processing circuit 122 (for example, a field programmable gate array (FPGA)), as illustrated in FIG. 1D. The configurable processing circuit 122 may be connected to the storage controller 112, to the flash interface 125, and to the storage memory 114. Being connected together, the storage controller 112 and the configurable processing circuit 122 may be considered to be a single processing circuit. The configurable processing circuit 122 may include an on-chip buffer ("Buf") 115, which may include memory (for example, volatile memory).

In some embodiments, the configurable processing circuit 122 is reconfigurable by programming after the persistent storage device 104 manufactured (for example, the configurable processing circuit 122 may (as mentioned above) be a field programmable gate array; in other embodiments a processing circuit containing hard-wired logic (for example, an application-specific integrated circuit (ASIC)) is used instead of a configurable processing circuit to similar effect.

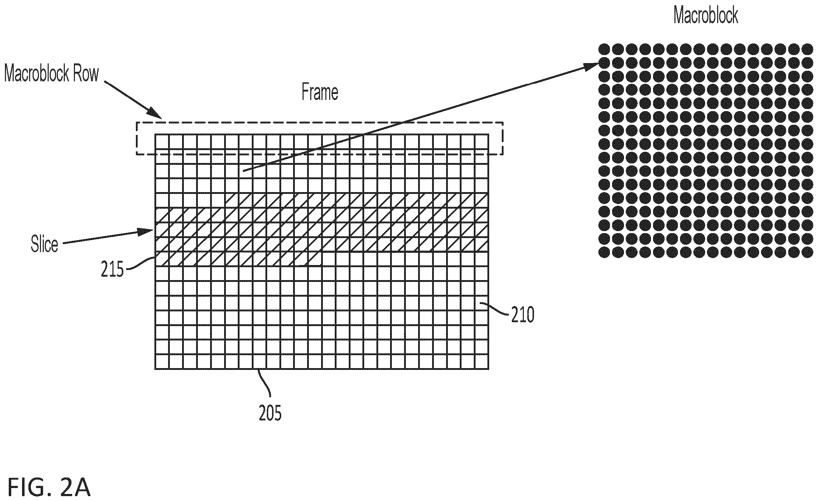

A video encoder may encode the raw video data (which may, for example, be in luma and chroma (Y'UV or YUV or yuv) format picture by picture). Referring to FIG. 2A, each image of the stream of images forming the video stream may be referred to as a frame 205, and may be split into macroblocks (MBs) 210 with fixed size (for example, 16 x 16 pixels). A macroblock 210 may be the basic unit for encoding or decoding. With high resolution pictures (for example, 1080p and 4K), a single decoding error may be an obstacle to the decoding of the entire frame. To make the encoding and decoding more robust, multiple macroblocks 210 may be grouped together as a bigger data unit which may be referred to as a slice 215. The encoding or decoding of one macroblock 210 in one slice 215 may be independent of (for example, may not rely on) any macroblocks 210 in any other slice 215. This method may limit the potential errors within a single slice 215 and may prevent the error from spreading across multiple slices 215. FIG. 2A shows the layout of a single frame. The small square represents a macroblock of 16 x 16 pixels. Each slice 215 includes a contiguous set of macroblocks 210 (for example, contiguous according to a raster scan that proceeds left to right and then top to bottom) that may be, but need not be, rectangular. For example, the set of cross-hatched squares in FIG. 2A represents a set of macroblocks 210 in a slice 215 that is not rectangular.

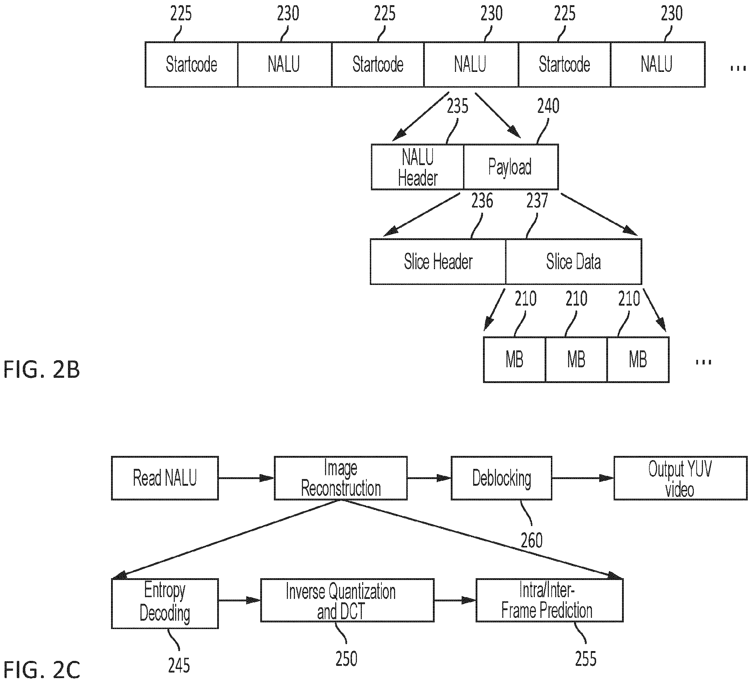

When decoding, the decoder may take a compressed video bitstream as input and generate a YUV file as the output. The decoding may follow a hierarchy of frame -> slice -> macroblock. FIG. 2B shows the layout of an example of a bitstream for a single frame encoded using Advanced Video Coding (H.264). The bitstream includes (for example, is composed of) a series of Network Abstraction Layer (NAL) units (NALUs) 230 that are separated by a start code 225 (which may have a length of 3 or 4 bytes). Each Network Abstraction Layer unit 230 includes a header 235 followed by a payload 240. The payload of the Network Abstraction Layer unit 230 includes a slice header 236 followed by slice data 237. The slice data 237 is composed of a series of compressed macroblocks 210 (MBs) that are the basic decoding units. There are various types of Network Abstraction Layer units 230. Some Network Abstraction Layer units 230 are used for video or picture parameters, and some are data Network Abstraction Layer units 230, each of which may represent a compressed slice 215. Because the decoding of each slice 215 is independent of the decoding of all other slices 215, it is possible to implement slice-level parallelism on a high-efficiency hardware accelerator.

In some embodiments, a video decoder contains multiple internal stages that form a pipeline structure. Each stage receives results as input from the stage before it and outputs processed data to the next stage. Such a pipelined structure may make it possible to construct a hardware pipeline to accelerate the data flow, for example, using one or more field-programmable gate arrays (FPGAs). FIG. 2C shows a two-layer decoding flow for a single NALU on an H.264 decoder, in some embodiments. The first layer shows two main components of this flow: image reconstruction and deblocking. Image reconstruction may include (for example, consist of) three sub-stages: entropy decoding 245, inverse quantization and inverse DCT (discrete cosine transform) 250 and intra/inter-frame prediction 255. In the deblocking stage 260, a deblock filter may be used to improve visual quality and prediction performance of the reconstructed image by smoothing the sharp edges between macroblocks 210.

In some embodiments, video processing using parallel operations is performed only for Intra frames (I frames), and not for predicted frames (P frames) and bidirectional frames (B frames). For Intra-Frame prediction, the prediction of all MBs may be performed first, and then the deblocking of all MBs may begin; for Inter-Frame prediction (e.g., P-Frame and B-Frame), the prediction (i.e., image reconstruction) may rely on reference frames that may be I or P frames. The reference frames have been already filtered or deblocked before they are used in predictions of other frames. For example, the reference frames may be earlier decoded frames that are sent for displaying and for being used as reference frames for the reconstruction of later frames as well. For example, if a decoded I frame (called frame 0) has been generated, and frame 1 is a P frame and needs to use frame 0 as its reference frame, then since frame 0 just needs to be read, multiple slices in frame 1 may read frame 0 concurrently for their respective decoding in parallel.

In some embodiments, multiple parallelisms are employed in the decoding of video data, including macroblock-level parallelism, slice-level parallelism, and component-level parallelism. For example, a single-pipeline embodiment may implement macro-block-level parallelism and component-level parallelism. Because it is feasible to implement image reconstruction in a pipeline, a hardware pipeline may be constructed to overlap the processing across multiple sub-stages.

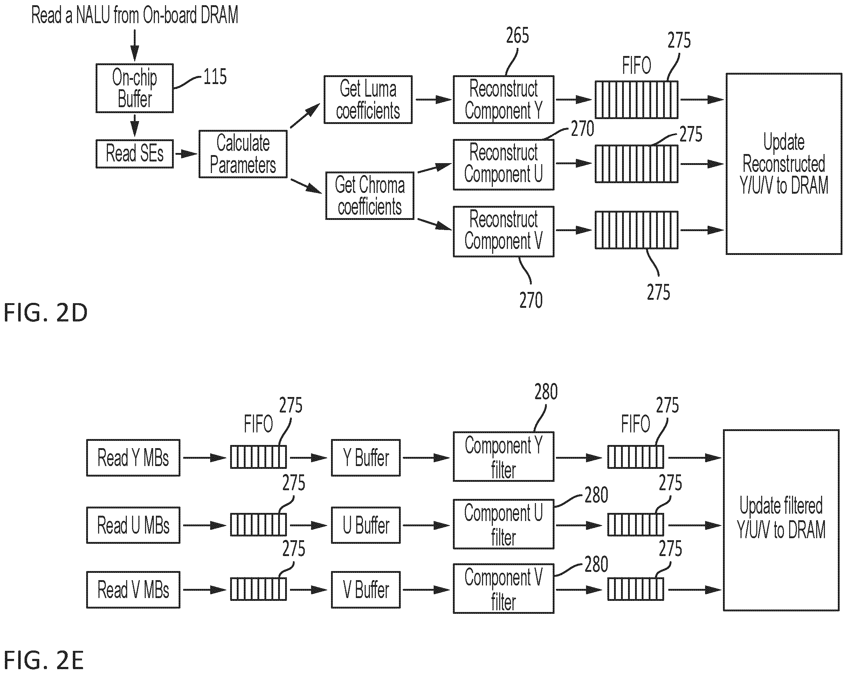

FIG. 2D shows this data flow. At the beginning, the raw compressed video bitstream file that is stored in external storage (for example, in a persistent storage device 104, such as those of FIGs. 1A - 1C) is loaded into the storage memory 114 (which may be referred to as on-board DRAM) attached to the configurable processing circuit 122. Due to the long access latency to DRAM, the bitstream is first loaded into the local on-chip buffer 115. Concurrently, the decoder may read a Network Abstraction Layer unit 230 and identify the macroblocks 210 contained in the Network Abstraction Layer unit 230. Each macroblock 210 may be fed into the pipeline one by one. With the current macroblock 210, the syntax elements (SEs) are identified and decoded to form coefficients including luma and chroma coefficients.

An image in yuv format may contain three components: Y (which may be referred to as the luma component), and U and V (which may be referred to as the chroma components). These three components may be decoded independently. Therefore, the coefficients are separated and sent to three parallel units (e.g., a luma reconstruction unit 265, and two chroma reconstruction units 270) for image reconstruction. In each of the three parallel units, the coefficients for one component are converted to pixel values for the component (for example, a luma pixel value for each of a plurality of pixels, and two chroma pixel values for each of a plurality of pixels). The resultant images may be streamed to the storage memory 114 (for example, the on-board DRAM) by three independent first-in-first-out data structures (FIFOs) 275.

If the storage memory 114 includes a single dynamic random access memory (DRAM) bank then the stream write from the first-in-first-out data structure to the storage memory 114 may include interleaved data from the components. If the storage memory 114 includes multiple (for example, three or more) dynamic random access memory banks then the stream write from the first-in-first-out data structure to the storage memory 114 may include parallel data corresponding to the respective components.

Each FIFO 275 may include multiple FIFOs. For example, each FIFO in FIG. 2D may contain three FIFOs: one FIFO each data item of which contains control information such as the end flag of a slice; one FIFO each data item of which is a reconstructed 4x4 block within a macroblock; and one FIFO each data item of which is an address offset of each 4x4 block in the DRAM to the current component's start address. The three components Y, U, V may already have their respective store memory spaces allocated in the DRAM before the accelerator begins to run.

Similarly, each FIFO connected to the DRAM as a whole may be composed of multiple FIFOs in FIG. 2E: one FIFO whose data item is one row of the current macroblock (for Y, each row may have 16 pixels; for U and V, each row may have 8 pixels.). The row may be stored in an array. As such, the array's size may be either 16 bytes for Y or 8 byes for U and V. One FIFO may include data items that include meta data such as the coordinates of the current macroblock within the current frame.

With the above-mentioned macroblock coordinates, the target address in DRAM where a deblocked macroblock is stored in the DRAM may be calculated. Additionally, a round-robin method may be used to transfer Y, U, and V components in the current macroblock, macroblock by macroblock. This approach does not necessarily ensure a balanced state across the three FIFOs, however, because the deblocking latency of the Y, U, and V components may be different.

With such a pipeline, multiple macroblocks 210 may be processed simultaneously. Therefore, both macroblock-level and component-level parallelism are implemented. In some embodiments, the reconstructed image is not directly streamed into the deblocking stage because not all macroblocks 210 need to be deblocked.

In the deblocking stage, because each macroblock's deblocking depends on its previous filtered macroblocks 210, there may be no full macroblock-level parallelism for the deblocking algorithm itself. One macroblock's reading and another macroblock's processing may nonetheless be pipelined, however. Therefore, limited macroblock-level parallelism may be achieved in terms of the whole pipeline. Additionally, component-level parallelism may be implemented in any event.

FIG. 2E shows a pipeline diagram in some embodiments, for performing deblocking using one deblocking filter 280 for each component. In the deblocking pipeline, the components Y, U and V of each macroblock 210 may be read from the storage memory 114 into three respective on-chip buffers 115 (or three respective regions of a single on-chip buffer 115) via three independent first-in-first-out data structures 275. Each on-chip buffer 115 may be capable of holding two macroblock rows. Multiple macroblocks 210 may be stored in the on-chip buffer 115, to enable, for example, the resolving of the inter-macroblock data dependency when filtering a macroblock 210. Once the filtering of a macroblock 210 is complete, the updated macroblock 210 component may be streamed to the storage memory 114 via another three independent first-in-first-out data structures 275.

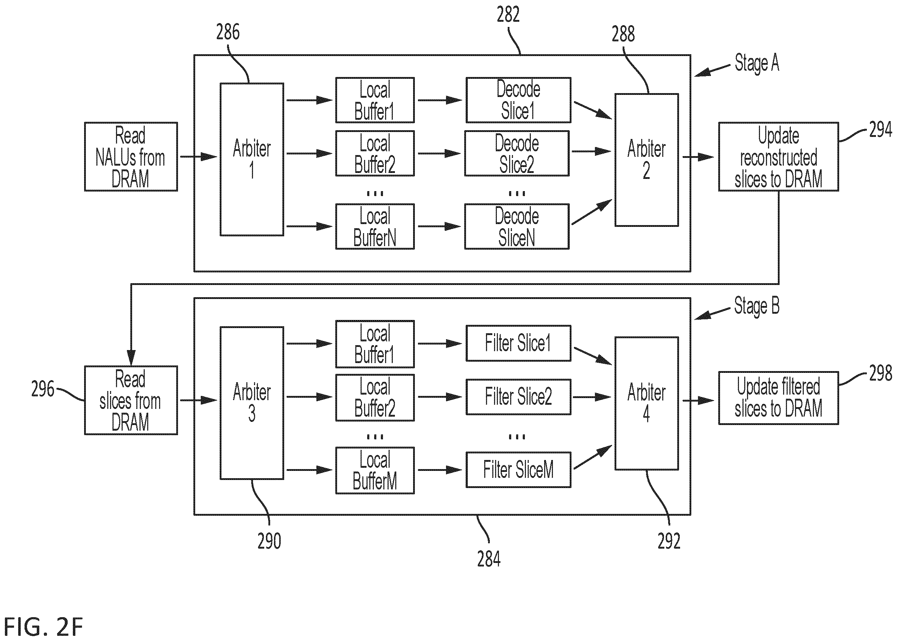

Some embodiments include a multi-pipeline embodiment with configurable slice-level parallelism. The single pipeline embodiment discussed above (in the context of FIGs. 2D and 2E) may be employed for the decoding of a single Network Abstraction Layer unit 230 at a time, or of a single slice 215 at a time. Since the decoding of a slice 215 may be performed with no dependency on the decoding of other slices 215, multiple hardware pipelines may be deployed to achieve additional parallelism. FIG. 2F shows such an embodiment. In this embodiment, the entire decoding process is split into two stages: a first stage 282, (which may be referred to as Stage A), which is employed to perform image reconstruction, and a second stage 284, (which may be referred to as Stage B), which is employed for deblocking. The hardware in each stage may include multiple pipelines configured to process multiple slices 215 concurrently. The number of pipelines that may be deployed may be determined by available hardware resources such as lookup tables (LUTs), block random access memory (BRAM), digital signal processors (DSP), or the like.

In the first stage (Stage A), Network Abstraction Layer units are read from the storage memory 114 (for example, the on-board dynamic random-access memory (DRAM)) and sent to a first arbiter 286 (which may be referred to as Arbiter 1) one by one, and the first arbiter may dispatch the current Network Abstraction Layer unit 230 to a free hardware pipeline. If no free pipeline is available, the current Network Abstraction Layer unit 230 may be held in a temporary buffer and the following read may be postponed. An embodiment with N pipelines (as illustrated in FIG. 2F), (i) may be capable of processing N slices 215 concurrently and (ii) may be capable of decoding the slices 215 out of order. The decoded slices 215 may subsequently be written to their corresponding positions in the frame. To this end, a second arbiter 288 (which may be referred to as Arbiter 2) may calculate the address offset for each slice 215. Within each slice 215, all macroblocks 210 may be written to the storage memory 114 in the order in which they appear in the slice 215.

The reconstructed images may be written to the storage memory 114 before deblocking because (i) a reconstructed slice 215 may be too large to fit in the on-chip buffer 115, and because (ii) not all slices 215 may need to be deblocked. Whether or not a slice 215 is to be deblocked may be indicated by a suitable flag (for example, by an encoded flag (e..g, a flag referred to as "disable_deblocking_filter_idc")).

Once all reconstructed slices 215 are written, at 294, to the storage memory 114, the second stage (Stage B) may begin processing the reconstructed slices 215. The hardware in the second stage 284 may read slices 215 that are to be deblocked and send the slices 215 that are to be deblocked to a third arbiter 290 (which may be referred to as Arbiter 3). The third arbiter may, at 296, read and dispatch the slices 215 that need to be deblocked into free pipelines, in a manner analogous to that employed by the first arbiter (in the first stage 282). The filtered slices 215 may be written, at 298, to the storage memory 114 by a fourth arbiter 292 (which may be referred to as Arbiter 4), which may be similar, in structure and function, to the second arbiter 288 (Arbiter 2), of the first stage 282.

This two-stage multiple pipeline architecture may provide very high parallelism across slices 215, macroblocks 210 and components. With single bank dynamic random access memory, all writes to dynamic random access memory may be done in an interleaved manner, which may significantly affect the performance of the entire system. As such, in some embodiments, the persistent storage device 104 may include a high bandwidth storage memory 114 to reach its full potential. For example, the storage memory 114 may include, or be based on, a multi-bank DRAM or High-Bandwidth Memory (HBM).

The configurability of a persistent storage device 104 that includes a configurable processing circuit 122 which is programmable after manufacture (for example, a field-programmable gate array) may provide high flexibility for deploying some embodiments. A resource-limited platform such as a low-end field-programmable gate array may achieve limited parallelism by deploying a platform with few hardware pipelines in Stage A and/or Stage B. For examples, the ratio of N:M (where N is the number of hardware pipelines in Stage A and M is the number of hardware pipelines in Stage B) may be 1:1, 2:1 or 1:2. A high-end FPGA may be capable of achieving significantly greater parallelism by deploying, for example, a platform with each stage containing tens of pipelines.

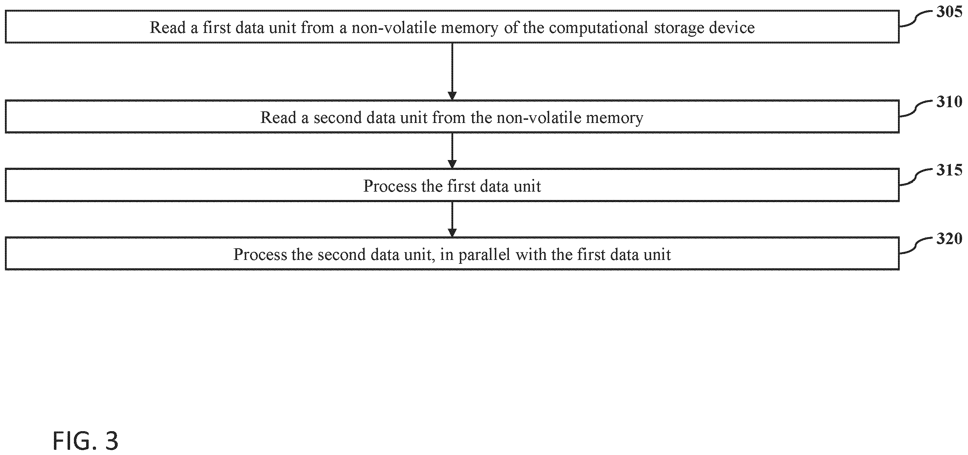

FIG. 3 is a flow chart of a method, in some embodiments. The method includes reading, at 305, by a processing circuit of a computational storage device, a first data unit from a non-volatile memory of the computational storage device; reading, at 310, by the processing circuit, a second data unit from the non-volatile memory; processing, at 315, the first data unit; and processing, at 320, the second data unit, in parallel with the first data unit.

As used herein, "a portion of" something means "at least some of" the thing, and as such may mean less than all of, or all of, the thing. As such, "a portion of" a thing includes the entire thing as a special case, i.e., the entire thing is an example of a portion of the thing. As used herein, when a second quantity is "within Y" of a first quantity X, it means that the second quantity is at least X-Y and the second quantity is at most X+Y. As used herein, when a second number is "within Y%" of a first number, it means that the second number is at least (1-Y/100) times the first number and the second number is at most (1+Y/100) times the first number. As used herein, the term "or" should be interpreted as "and/or", such that, for example, "A or B" means any one of "A" or "B" or "A and B".

The background provided in the Background section of the present disclosure section is included only to set context, and the content of this section is not admitted to be prior art. Any of the components or any combination of the components described (e.g., in any system diagrams included herein) may be used to perform one or more of the operations of any flow chart included herein. Further, (i) the operations are example operations, and may involve various additional steps not explicitly covered, and (ii) the temporal order of the operations may be varied.

Each of the terms "processing circuit" and "means for processing" is used herein to mean any combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general-purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example, a processing circuit may include two processing circuits, an FPGA and a CPU, interconnected on a PCB.

As used herein, when a method (e.g., an adjustment) or a first quantity (e.g., a first variable) is referred to as being "based on" a second quantity (e.g., a second variable) it means that the second quantity is an input to the method or influences the first quantity, e.g., the second quantity may be an input (e.g., the only input, or one of several inputs) to a function that calculates the first quantity, or the first quantity may be equal to the second quantity, or the first quantity may be the same as (e.g., stored at the same location or locations in memory as) the second quantity.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section.

Spatially relative terms, such as "beneath", "below", "lower", "under", "above", "upper" and the like, may be used herein for ease of description to describe one element or feature's relationship to another element(s) or feature(s) as illustrated in the figures. It will be understood that such spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. In addition, it will also be understood that when a layer is referred to as being "between" two layers, it can be the only layer between the two layers, or one or more intervening layers may also be present.

The terminology used herein is for the purpose of describing particular embodiments only and is not intended to be limiting of the inventive concept. As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

It will be understood that when an element or layer is referred to as being "on", "connected to", "coupled to", or "adjacent to" another element or layer, it may be directly on, connected to, coupled to, or adjacent to the other element or layer, or one or more intervening elements or layers may be present. In contrast, when an element or layer is referred to as being "directly on", "directly connected to", "directly coupled to", or "immediately adjacent to" another element or layer, there are no intervening elements or layers present.

Any numerical range recited herein is intended to include all sub-ranges of the same numerical precision subsumed within the recited range. For example, a range of "1.0 to 10.0" or "between 1.0 and 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Similarly, a range described as "within 35% of 10" is intended to include all subranges between (and including) the recited minimum value of 6.5 (i.e., (1 - 35/100) times 10) and the recited maximum value of 13.5 (i.e., (1 + 35/100) times 10), that is, having a minimum value equal to or greater than 6.5 and a maximum value equal to or less than 13.5, such as, for example, 7.4 to 10.6. Any maximum numerical limitation recited herein is intended to include all lower numerical limitations subsumed therein and any minimum numerical limitation recited in this specification is intended to include all higher numerical limitations subsumed therein.

It will be understood that when an element is referred to as being "directly connected" or "directly coupled" to another element, there are no intervening elements present. As used herein, "generally connected" means connected by an electrical path that may contain arbitrary intervening elements, including intervening elements the presence of which qualitatively changes the behavior of the circuit. As used herein, "connected" means (i) "directly connected" or (ii) connected with intervening elements, the intervening elements being ones (e.g., low-value resistors or inductors, or short sections of transmission line) that do not qualitatively affect the behavior of the circuit.

Some embodiments may include features of the following numbered statements.
1. A system, comprising:
   a computational storage device,
   the computational storage device comprising:
      non-volatile storage; and
      a processing circuit,
   the processing circuit being configured:
      to process a first data unit; and
      to process a second data unit, in parallel with the first data unit.
2. The system of statement 1, wherein:
   the first data unit comprises a first portion of an image; and
   the second data unit comprises a second portion of the image.
3. The system of statement 1 or statement 2, wherein:
   the first data unit comprises a first portion of an image;
   the second data unit comprises a second portion of the image;
   the first portion of the image is a first component of a first piece of the image; and
   the second portion of the image is a second component of the first piece of the image.
4. The system of any one of the preceding statements, wherein:
   the first data unit comprises a first portion of an image;
   the second data unit comprises a second portion of the image;
   the first portion of the image is a first component of a first piece of the image;
   the second portion of the image is a second component of the first piece of the image;
   the first component is a luma component; and
   the second component is a chroma component.
5. The system of any one of the preceding statements, wherein:
   the first data unit comprises a first portion of an image;
   the second data unit comprises a second portion of the image;
   the first portion of the image is a first component of a first piece of the image;
   the second portion of the image is a second component of the first piece of the image;
   the first component is a luma component;
   the second component is a chroma component;
   the processing circuit is configured to process the first data unit using an inverse discrete cosine transform; and
   the processing circuit is configured to process the second data unit using an inverse discrete cosine transform.
6. The system of any one of the preceding statements, wherein:
   the first data unit comprises a first portion of an image;
   the second data unit comprises a second portion of the image;
   the first portion of the image is a first component of a first piece of the image;
   the second portion of the image is a second component of the first piece of the image;
   the first component is a luma component;
   the second component is a chroma component;
   the processing circuit is configured to process the first data unit using a deblocking filter; and
   the processing circuit is configured to process the second data unit using a deblocking filter.
7. The system of statement 1, wherein:
   the first data unit comprises a first portion of an image;
   the second data unit comprises a second portion of the image;
   the first portion of the image is a first piece of the image; and
   the second portion of the image is a second piece of the image.
8. The system of statement 1, wherein:
   the first data unit comprises a first portion of an image;
   the second data unit comprises a second portion of the image;
   the first portion of the image is a first piece of the image;
   the second portion of the image is a second piece of the image;
   the processing circuit is configured to process the first data unit using entropy decoding; and
   the processing circuit is configured to process the second data unit using entropy decoding.
9. The system of statement 1, wherein:
   the first data unit comprises a first portion of an image;
   the second data unit comprises a second portion of the image;
   the first portion of the image is a first piece of the image;
   the second portion of the image is a second piece of the image;
   the processing circuit is configured to process the first data unit using a deblocking filter; and
   the processing circuit is configured to process the second data unit using a deblocking filter.
10. The system of statement 1, wherein:
   the first data unit comprises a first portion of an image;
   the second data unit comprises a second portion of the image;
   the first portion of the image is a first piece of the image;
   the second portion of the image is a second piece of the image;
   the processing circuit is configured to process the first data unit using entropy decoding;
   the processing circuit is configured to process the second data unit using entropy decoding;
   the processing circuit is further configured to process the first data unit using an inverse discrete cosine transform; and
   the processing circuit is further configured to process the second data unit using an inverse discrete cosine transform.
11. The system of statement 1, wherein:
   the first data unit comprises a first portion of an image;
   the second data unit comprises a second portion of the image;
   the first portion of the image is a first piece of the image;
   the second portion of the image is a second piece of the image;
   the processing circuit is configured to process the first data unit using entropy decoding;
   the processing circuit is configured to process the second data unit using entropy decoding;
   the processing circuit is further configured to process the first data unit using an inverse discrete cosine transform;
   the processing circuit is further configured to process the second data unit using an inverse discrete cosine transform;
   the processing circuit is further configured to process the first data unit using a deblocking filter; and
   the processing circuit is further configured to process the second data unit using a deblocking filter.
12. The system of statement 1, further comprising a storage memory, wherein:
   the first data unit comprises a first portion of an image;
   the second data unit comprises a second portion of the image;
   the first portion of the image is a first piece of the image;
   the second portion of the image is a second piece of the image;
   the processing circuit is configured to process the first data unit using entropy decoding;
   the processing circuit is configured to process the second data unit using entropy decoding;
   the processing circuit is further configured to process the first data unit using an inverse discrete cosine transform to form a first pixel value;
   the processing circuit is further configured to process the second data unit using an inverse discrete cosine transform to form a second pixel value;
   the processing circuit is further configured to store the first pixel value in the storage memory;
   the processing circuit is further configured to store the second pixel value in the storage memory;
   the processing circuit is further configured to read the first pixel value from the storage memory;
   the processing circuit is further configured to read the second pixel value from the storage memory;
   the processing circuit is further configured to process the first pixel value using a deblocking filter; and
   the processing circuit is further configured to process the second pixel value using a deblocking filter.
13. A method, comprising:
   reading, by a processing circuit of a computational storage device, a first data unit from a non-volatile memory of the computational storage device;
   reading, by the processing circuit, a second data unit from the non-volatile memory;
   processing the first data unit; and
   processing the second data unit, in parallel with the first data unit.
14. The method of statement 13, wherein:
   the first data unit comprises a first portion of an image;
   the second data unit comprises a second portion of the image;
   the first portion of the image is a first piece of the image;
   the second portion of the image is a second piece of the image;
   the processing of the first data unit comprises using entropy decoding; and
   the processing of the second data unit comprises using entropy decoding.
15. The method of statement 13 or statement 14, wherein:
   the first data unit comprises a first portion of an image;
   the second data unit comprises a second portion of the image;
   the first portion of the image is a first piece of the image;
   the second portion of the image is a second piece of the image;
   the processing of the first data unit comprises using entropy decoding;
   the processing of the second data unit comprises using entropy decoding;
   the processing of the first data unit further comprises using an inverse discrete cosine transform; and
   the processing of the second data unit further comprises using an inverse discrete cosine transform.
16. The method of any one of statements 13 to 15, wherein:
   the first data unit comprises a first portion of an image;
   the second data unit comprises a second portion of the image;
   the first portion of the image is a first piece of the image;
   the second portion of the image is a second piece of the image;
   the processing of the first data unit comprises using entropy decoding;
   the processing of the second data unit comprises using entropy decoding;
   the processing of the first data unit further comprises using an inverse discrete cosine transform;
   the processing of the second data unit further comprises using an inverse discrete cosine transform;
   the processing of the first data unit further comprises using a deblocking filter; and
   the processing of the second data unit further comprises using a deblocking filter.
17. The method of any of statements 13 to 16, wherein:
   the first data unit comprises a first portion of an image;
   the second data unit comprises a second portion of the image;
   the first portion of the image is a first piece of the image;
   the second portion of the image is a second piece of the image;
   the processing of the first data unit comprises using entropy decoding;
   the processing of the second data unit comprises using entropy decoding;
   the processing of the first data unit further comprises using an inverse discrete cosine transform to form a first pixel value;
   the processing of the second data unit further comprises using an inverse discrete cosine transform to form a second pixel value;
   the processing of the first data unit further comprises storing the first pixel value in a storage memory of the computational storage device;
   the processing of the second data unit further comprises storing the second pixel value in the storage memory;
   the processing of the first data unit further comprises reading the first pixel value from the storage memory;
   the processing of the second data unit further comprises reading the second pixel value from the storage memory;
   the processing of the first pixel value comprises using a deblocking filter; and
   the processing of the second pixel value comprises using a deblocking filter.
18. A computational storage device comprising:
   non-volatile storage;
   a storage memory; and
   a processing circuit,
      the processing circuit being configured:
      to process a first data unit; and
      to process a second data unit, in parallel with the first data unit.
19. The computational storage device of statement 18, wherein:
   the first data unit comprises a first portion of an image;
   the second data unit comprises a second portion of the image;
   the first portion of the image is a first component of a first piece of the image;
   the second portion of the image is a second component of the first piece of the image;
   the first component is a luma component;
   the second component is a chroma component;
   the processing circuit is configured to process the first data unit using an inverse discrete cosine transform; and
   the processing circuit is configured to process the second data unit using an inverse discrete cosine transform.
20. The computational storage device of statement 18 or statement 19, wherein:
   the first data unit comprises a first portion of an image;
   the second data unit comprises a second portion of the image;
   the first portion of the image is a first component of a first piece of the image;
   the second portion of the image is a second component of the first piece of the image;
   the first component is a luma component;
   the second component is a chroma component;
   the processing circuit is configured to process the first data unit using a deblocking filter; and
   the processing circuit is configured to process the second data unit using a deblocking filter.

Although exemplary embodiments of a system and method for in-storage video processing have been specifically described and illustrated herein, many modifications and variations will be apparent to those skilled in the art. Accordingly, it is to be understood that a system and method for in-storage video processing constructed according to principles of this disclosure may be embodied other than as specifically described herein. The invention is also defined in the following claims, and equivalents thereof.

## Claims

1. A system, comprising:
a computational storage device,
the computational storage device comprising:
non-volatile storage; and
a processing circuit,
the processing circuit being configured:
to process a first data unit; and
to process a second data unit, in parallel with the first data unit.

2. The system of claim 1, wherein:
the first data unit comprises a first portion of an image; and
the second data unit comprises a second portion of the image.

3. The system of claim 1, wherein:
the first data unit comprises a first portion of an image;
the second data unit comprises a second portion of the image;
the first portion of the image is a first component of a first piece of the image; and
the second portion of the image is a second component of the first piece of the image.

4. The system of claim 1, wherein:
the first data unit comprises a first portion of an image;
the second data unit comprises a second portion of the image;
the first portion of the image is a first component of a first piece of the image;
the second portion of the image is a second component of the first piece of the image;
the first component is a luma component; and
the second component is a chroma component.

5. The system of claim 1, wherein:
the first data unit comprises a first portion of an image;
the second data unit comprises a second portion of the image;
the first portion of the image is a first component of a first piece of the image;
the second portion of the image is a second component of the first piece of the image;
the first component is a luma component;
the second component is a chroma component;
the processing circuit is configured to process the first data unit using an inverse discrete cosine transform; and
the processing circuit is configured to process the second data unit using an inverse discrete cosine transform.

6. The system of claim 1, wherein:
the first data unit comprises a first portion of an image;
the second data unit comprises a second portion of the image;
the first portion of the image is a first component of a first piece of the image;
the second portion of the image is a second component of the first piece of the image;
the first component is a luma component;
the second component is a chroma component;
the processing circuit is configured to process the first data unit using a deblocking filter; and
the processing circuit is configured to process the second data unit using a deblocking filter.

7. The system of claim 1, wherein:
the first data unit comprises a first portion of an image;
the second data unit comprises a second portion of the image;
the first portion of the image is a first piece of the image; and
the second portion of the image is a second piece of the image.

8. The system of claim 1, wherein:
the first data unit comprises a first portion of an image;
the second data unit comprises a second portion of the image;
the first portion of the image is a first piece of the image;
the second portion of the image is a second piece of the image;
the processing circuit is configured to process the first data unit using entropy decoding; and
the processing circuit is configured to process the second data unit using entropy decoding.

9. The system of claim 1, wherein:
the first data unit comprises a first portion of an image;
the second data unit comprises a second portion of the image;
the first portion of the image is a first piece of the image;
the second portion of the image is a second piece of the image;
the processing circuit is configured to process the first data unit using a deblocking filter; and
the processing circuit is configured to process the second data unit using a deblocking filter.

10. The system of claim 1, wherein:
the first data unit comprises a first portion of an image;
the second data unit comprises a second portion of the image;
the first portion of the image is a first piece of the image;
the second portion of the image is a second piece of the image;
the processing circuit is configured to process the first data unit using entropy decoding;
the processing circuit is configured to process the second data unit using entropy decoding;
the processing circuit is further configured to process the first data unit using an inverse discrete cosine transform; and
the processing circuit is further configured to process the second data unit using an inverse discrete cosine transform.

11. The system of claim 1, wherein:
the first data unit comprises a first portion of an image;
the second data unit comprises a second portion of the image;
the first portion of the image is a first piece of the image;
the second portion of the image is a second piece of the image;
the processing circuit is configured to process the first data unit using entropy decoding;
the processing circuit is configured to process the second data unit using entropy decoding;
the processing circuit is further configured to process the first data unit using an inverse discrete cosine transform;
the processing circuit is further configured to process the second data unit using an inverse discrete cosine transform;
the processing circuit is further configured to process the first data unit using a deblocking filter; and
the processing circuit is further configured to process the second data unit using a deblocking filter.

12. The system of claim 1, further comprising a storage memory, wherein:
the first data unit comprises a first portion of an image;
the second data unit comprises a second portion of the image;
the first portion of the image is a first piece of the image;
the second portion of the image is a second piece of the image;
the processing circuit is configured to process the first data unit using entropy decoding;
the processing circuit is configured to process the second data unit using entropy decoding;
the processing circuit is further configured to process the first data unit using an inverse discrete cosine transform to form a first pixel value;
the processing circuit is further configured to process the second data unit using an inverse discrete cosine transform to form a second pixel value;
the processing circuit is further configured to store the first pixel value in the storage memory;
the processing circuit is further configured to store the second pixel value in the storage memory;
the processing circuit is further configured to read the first pixel value from the storage memory;
the processing circuit is further configured to read the second pixel value from the storage memory;
the processing circuit is further configured to process the first pixel value using a deblocking filter; and
the processing circuit is further configured to process the second pixel value using a deblocking filter.

13. A method, comprising:
reading, by a processing circuit of a computational storage device, a first data unit from a non-volatile memory of the computational storage device;
reading, by the processing circuit, a second data unit from the non-volatile memory;
processing the first data unit; and
processing the second data unit, in parallel with the first data unit.

14. The method of claim 13, wherein:
the first data unit comprises a first portion of an image;
the second data unit comprises a second portion of the image;
the first portion of the image is a first piece of the image;
the second portion of the image is a second piece of the image;
the processing of the first data unit comprises using entropy decoding; and
the processing of the second data unit comprises using entropy decoding.

15. The method of claim 13, wherein:
the first data unit comprises a first portion of an image;
the second data unit comprises a second portion of the image;
the first portion of the image is a first piece of the image;
the second portion of the image is a second piece of the image;
the processing of the first data unit comprises using entropy decoding;
the processing of the second data unit comprises using entropy decoding;
the processing of the first data unit further comprises using an inverse discrete cosine transform; and
the processing of the second data unit further comprises using an inverse discrete cosine transform.
